# EUROPÄISCHE PATENTSCHRIFT

(11) **EP 0 666 390 B1**
(45) Veröffentlichungstag und Bekanntmachung des Hinweises auf die Patenterteilung: **14.05.1997**
(21) Anmeldenummer: 95101456.2
(22) Anmeldetag: 03.02.1995
(51) Int. Cl.: E04H 6/00

(54) **Aufbewahrungsbehälter für Zweiräder, insbesondere für Fahrräder**
Storage container for two wheelers, especially for bicycles
Réceptacle de rangement pour véhicules à deux roues, en particulier pour bicyclettes

(30) Priorität: 08.02.1994 DE 4403859
(43) Veröffentlichungstag der Anmeldung: 09.08.1995
(73) Patentinhaber: Friess Metallbau GmbH, D-74182 Obersulm-Sülzbach (DE)
(72) Erfinder: Ehrhardt,Dieter, D-76646 Bruchsal-Heidelsheim (DE)
(74) Vertreter: Clemens, Gerhard, Dr.-Ing.

(56) Entgegenhaltungen:
- WO-A-89/08578
- AU-B- 517 175

## Beschreibung

Die Erfindung betrifft einen Aufbewahrungsbehälter für Zweiräder, insbesondere für Fahrräder, gemäß dem Oberbegriff von Anspruch 1.

Aufbewahrungsbehälter für Zweiräder sind bekannt und dienen insbesondere dazu, Fahrräder, Mopeds, Motorroller und Motorräder gegen Wind und Wetter sowie den ungerechtfertigten Zugriff Dritter geschützt unterzustellen. Um eine räumlich platzsparende Anordnung zu erhalten, weisen die bekannten Aufbewahrungsbehälter zum Teil eine trapez-, tortenstück- oder dreiecksförmige Grundfläche auf, welche es erlaubt, eine größere Anzahl von Aufbewahrungsbehältern kreisförmig, halbkreisförmig oder entlang einer Reihe hintereinander anzuordnen.

Aus der US-PS 4 156 994 ist eine Garage für Zweiräder bekannt, welche aus einer größeren Anzahl von einzelnen, eine trapezförmige Grundfläche aufweisenden Aufbewahrungsbehältern besteht, die auf einem rotierbaren Gestell kreisförmig nebeneinander angeordnet sind. Jeder der Aufbewahrungsbehälter besitzt ein zur Seite klappbares Deckenteil sowie eine nach unten klappbare und als Auffahrrampe dienende Frontklappe, über welche das Zweirad mit dem rückwärtigen Ende zuerst in den Aufbewahrungsbehälter geschoben werden kann. Wegen des nach oben aufklappbaren Deckenteils sind dieAufbewahrungsbehälter der US-PS 4 156 994 nicht übereinander stapelbar.

Die EP 0 257 494 zeigt eine Zweirad-Box mit einer dreiecks- oder tortenstückförmigen Grundfläche sowie einer Aufnahmeeinrichtung für den Lenker eines Zweirades, in welche das Zweirad mit seinem Vorderrad zuerst hineingeschoben und auf seinem Hinterrad stehend in Schrägstellung aufbewahrt wird. Eine größere Zahl von Zweiradboxen können zu einem Kreis oder zu einer linearen Anordnung zusammengefaßt werden. Die Zweiradbox der EP 0 257 494 weist ferner eine vergleichsweise große Bauhöhe auf, wodurch im Falle einer doppelstöckigen Anordnung eine Benutzung der oberen Boxen nur über eine Treppe oder eine externe Rampe möglich ist.

Die WO-A-8908578 betrifft einen Aufbewahrungsbehälter für Zweiräder, insbesondere für Fahrräder, mit zwei im wesentlichen im spitzen Winkel zueinander angeordneten, den Aufbewahrungsbehälter seitlich begrenzenden Seitenwänden, mit einem den Aufbewahrungsbehälter nach unten hin begrenzenden Bodenteil und einem den Aufbewahrungsbehälter nach oben hin begrenzenden Deckenteil sowie mit einer dem Schnittpunkt der Seitenwände gegenüberliegenden Front-Öffnung zum Einführen eines Zweirads mit seinem rückwärtigen Ende voran in den Aufbewahrungsbehälter, wobei zumindest eines der Seitenteile eine geringere Länge als das Boden- und Deckenteil im Bereich der Mitte der Front-Öffnung besitzt.

Durch die Erfindung soll die Aufgabe gelöst werden, einen Aufbewahrungsbehälter anzugeben, der es einer durchschnittlich großen Person ermöglicht, daß sie das Zweirad am Lenker oder am Lenkkopf haltend rückwärts in den Aufbewahrungsbehälter hineinschieben kann, ohne daß sie sich dazu in umständlicher Weise bücken oder in gebückter Haltung in den Aufbewahrungsbehälter hineinbegeben muß. Weiterhin liegt der Erfindung die Aufgabe zugrunde, einen raumsparenden, in einer oder mehreren Ebenen stapelbare Aufbewahrungsbehälter bzw. Formationen für Zweiradräder zu schaffen, welche eine gute Zugänglichkeit beim Einführen und Entnehmen des Zweirades gewährleistet werden kann und welche/r in einfacher und kostengünstiger Weise hergestellt werden kann.

Der erfindungsgemäße Aufbewahrungsbehälter ist durch die Merkmale des unabhängigen Anspruchs 1 gegeben. Vorteilhafte Ausgestaltung und Weiterbildung sind Gegenstand der abhängigen Ansprüche. Der erfindungsgemäße Aufbewahrungsbehälter für Zweiräder, insbesondere für Fahrräder, mit zwei im wesentlichen im spitzen Winkel zueinander angeordneten, den Aufbewahrungsbehälter seitlich begrenzenden Seitenwänden, mit einem den Aufbewahrungsbehälter nach unten hin begrenzenden Bodenteil und einem den Aufbewahrungsbehälter nach oben hin begrenzenden Deckenteil sowie mit einer dem Schnittpunkt der Seitenwände gegenüberliegenden Front-Öffnung zum Einführen eines Zweirads mit seinem rückwärtigen Ende voran in den Aufbewahrungsbehälter, wobei zumindest eines der Seitenteile eine geringere Länge als das Boden- und Deckenteil im Bereich der Mitte der Front-Öffnung besitzt, zeichnet sich demgemäß dadurch aus, daß die Grundfläche des Bodenteils und des Deckenteils im Bereich der Front-Öffnung, eine zwischen der einen Seitenwand und der Mitte der Front-Öffnung gebildete Ausnehmung mit einer entlang der Ausnehmung verlaufenden Abschlußkante des Boden- und Deckenteils aufweist.

Der erfindungsgemäße Aufbewahrungsbehälter für Zweiräder weist insbesondere den Vorteil auf, daß auch dann noch ein guter und bequemer Zugang zu einem in ihm enthaltenen Zweirad gewährleistet ist, wenn eine größere Zahl von Behältern in raumsparender Weise nebeneinanderund/oder in einer oder mehreren Ebenen übereinander angeordnet werden. Der erfindungsgemäße Aufbewahrungsbehälter besitzt darüberhinaus den Vorteil, daß er zum Hineinschieben des Zweirades nicht betreten werden muß und somit eine sehr.geringe, das Zweirad nur wenige cm überragende Bauhöhe aufweisen kann. Aufgrund dieser geringen Bauhöhe sowie der erfindungsgemäßen geometrischen Form der Grundfläche des Aufbewahrungsbehälters ist es bei übereinandergestapelten Aufbewahrungsbehältern möglich, ein Zweirad, insbesondere ein Fahrrad, ohne größere Mühe und ohne zusätzliche Hilfmittel in einem der oberen Behälter abzustellen.

Die Erfindung wird im folgenden mit Bezug auf die Zeichnungen anhand von bevorzugten Ausführungsformen als Beispiele beschrieben. In den Zeichnungen zeigen
- Fig. 1: eine perspektivische Darstellung zweier deckungsgleich übereinander angeordneter erfindungsgemäßer Aufbewahrungsbehälter.
- Fig. 2: eine Frontansicht eines erfindunggemäßen Aufbewahrungsbehälters mit verschlossener Tür, sowie eines darauf gestapelten weiteren erfindungsgemäßen Aufbewahrungsbehälters mit geöffneter Tür und Sicht auf ein darin enthaltenes Zweirad,
- Fig. 3: eine Querschnittsansicht einer in einer bevorzugten Ausführungsform eines erfindungsgemäßen Aufbewahrungsbehälters angeordneten Auffahr-Schiene,
- Fig. 4: eine Querschnittsansicht eines erfindungsgemäßen Aufbewahrungsbehälters mit einer nach außen gewölbten Tür,
- Fig.5: eine Querschnittsansicht einer weiteren Tür eines erfindungsgemäßen Aufbewahrungsbehälters,
- Fig. 6: eine Querschnittsansicht einer in den Türen der Fig. 4 und 5 angeordneten Einrichtung zur Anzeige einer Nutzungsberechtigung für den erfindungsgemäßen Aufbewahrungsbehälter,
- Fig. 7: eine kreisförmige Anordnung von mehreren verschiedenen Ausführungsformen des erfindungsgemäßen Aufbewahrungsbehälters für Zweiräder,
- Fig. 8: eine kreisringausschnittsförmige Formation von erfindungsgemäßen Aufbewahrungsbehältern mit im radialen Abstand dazu angeordneten hergkömmlichen Garagen für drei- oder vierrädrige Fahrzeuge.

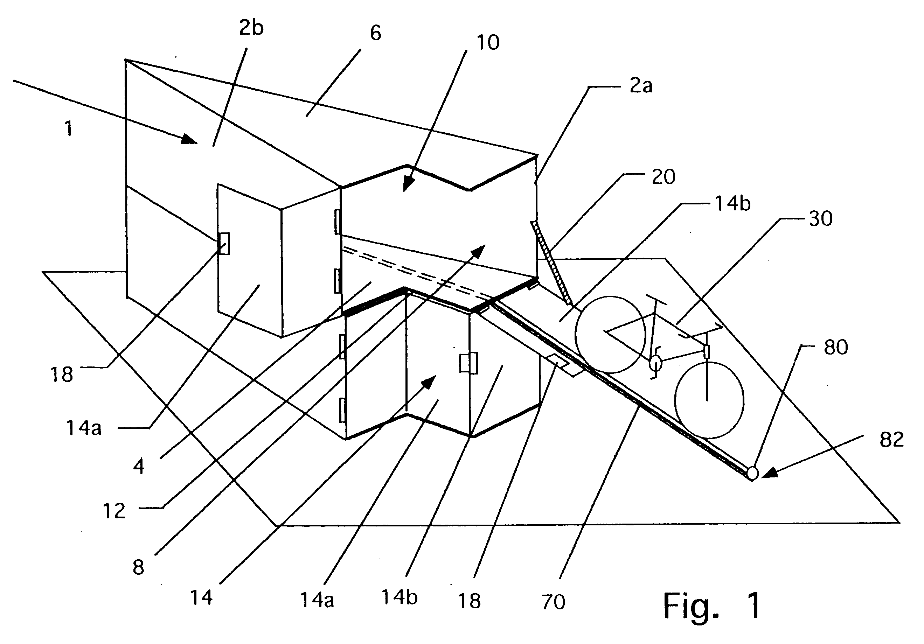

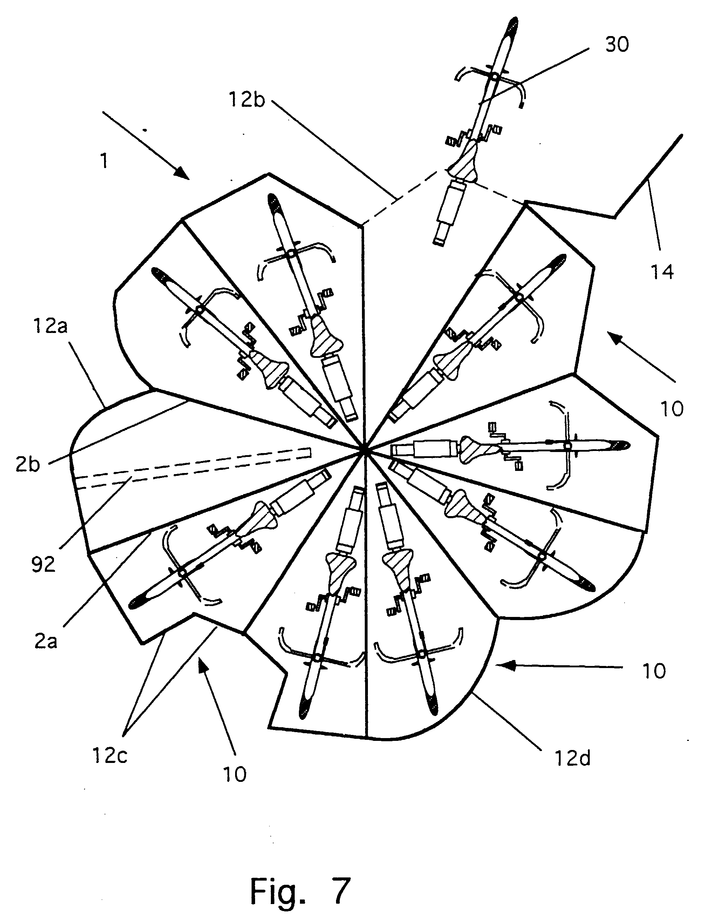

Der in Fig. 1 gezeigte erfindungsgemäße Aufbewahrungsbehälter 1 für Zweiräder enthält eine erste Seitenwand 2a, eine dazu im spitzen Winkel angeordnete und vorzugsweise eine geringere Länge aufweisende zweite Seitenwand 2b, ein den Aufbewahrungsbehälter 1 nach unten hin begrenzendes Bodenteil 4, ein den Aufbewahrungsbehälter 1 nach oben hin begrenzendes Decken- oder Dachteil 6 sowie eine Front-Öffnung 8, durch welche ein Zweirad 30 mit seinem rückwärtigen Ende voran in den Aufbewahrungsbehälter 1 hineingeschoben werden kann. Die Seitenwände 2a und 2b sowie das Boden- und Deckenteil 4, 6 bestehen aus einem widerstandsfähigen, witterungsbeständigen Werkstoff, wie beispielsweise platten- oder gitterförmigem Material aus Stahlblech, Aluminium, Kunststoff oder Holz. Um ein Verhaken z.B. des Lenkers, der Pedale, der Bremshebel, Körbe etc. des Zweirades zu verhindern, bestehen die Seitenwände 2a, 2b in diesem Bereich vorzugsweise nicht aus Drahtgittern sondern aus einem glattwandigen Werkstoff. Die Seitenwände 2a, 2b des erfindungsgemäßen Aufbewahrungsbehälters 1 weisen vorzugsweise eine Bauhöhe auf, die im Bereich zwischen 75 cm und 130 cm liegt und die damit nur geringfügig höher als die Höhe eines herkömmlichen Zweirades ist. Das Bodenteil 4 und das Deckenteil 6 besitzen eine im wesentlichen dreiecks- oder tortenstückförmige Grundfläche, welche im Bereich der Front-Öffnung 8 eine zwischen dem einen Seitenteil 2b und der Mitte der Front-Öffnung 8 gebildete Ausnehmung 10 mit einer entlang der Ausnehmung 10 verlaufenden Abschlußkante 12 des Boden- und Deckenteils 4, 6 aufweist. Die erfindungsgemäße Ausnehmung 10 ermöglicht es einer durchschnittlich großen Person, daß sie das Zweirad 30 am Lenker oder am Lenkkopf haltend rückwärts in den erfindungsgemäßen Aufbewahrungsbehälter 1 hineinschieben kann, ohne daß sie sich dazu in umständlicher Weise bücken oder in gebückter Haltung in den Aufbewahrungsbehälter 1 hineinbegeben muß. Nachdem das Zweirad 30 in den Aufbewahrungsbehälter 1 hineingeschoben wurde, wird es mit seinem der Ausnehmung 10 gegenüberliegenden Lenkerende und/oder mit dem Vorderrad gegen die der Ausnehmung 10 gegenüberliegende Seitenwand, z.B. die Seitenwand 2a in Fig. 1, gelehnt und dadurch gegen ein Umstürzen gesichert. Das Zweirad 30 kann jedoch ebenfalls, wie in Fig. 7 gezeigt, mit seinem rückwärtigen Ende an einer der beiden Seitenwände 2a, 2b angelehnt oder zwischen diesen eingeklemmt werden. Aufwendige Sicherungs- und Haltevorrichtungen zum Halten des Zweirades 30 in einer aufrechten Lage werden daher nicht benötigt.

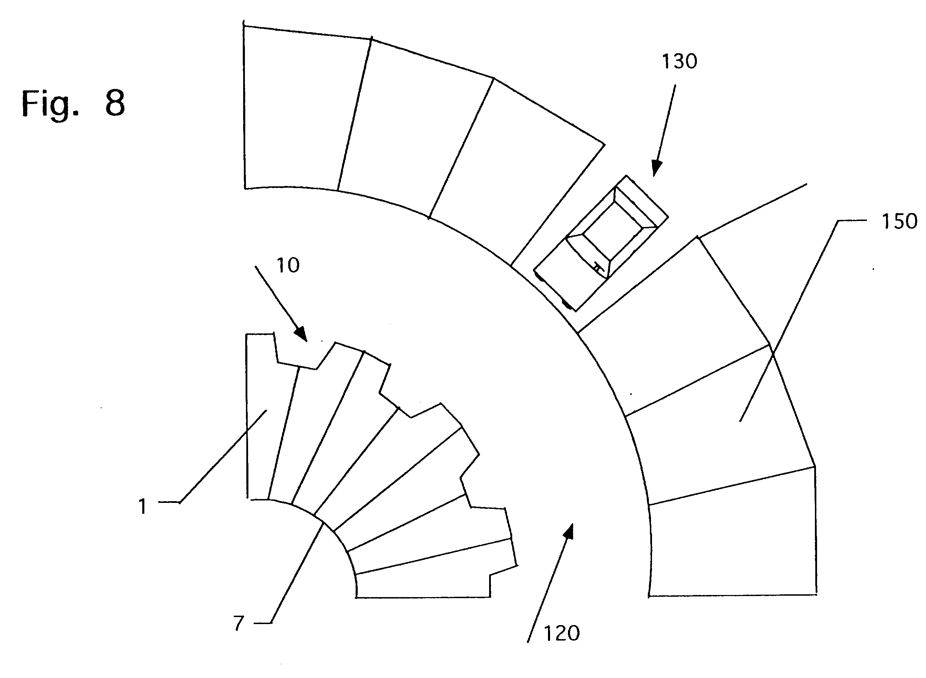

Wie in Fig. 8 gezeigt, kann der erfindungsgemäße Aufbewahrungsbehälter 1 ebenfalls eine trapezförmige Grundfläche besitzen, wobei in diesem Falle der Behälterinnenraum nach hinten hin durch eine der Front-Öffnung 8 gegenüberliegende ebene oder gewölbte Rückwand 7 begrenzt wird. Die Breite der Rückwand 7 ist vorzugsweise so gewählt, daß ein Zweirad mit einem daran oberhalb des Hinterrades befestigen Kindersitz oder mit Satteltaschen ebenfalls ausreichend Platz findet.

Die erfindungsgemäße Ausnehmung 10 kann unterschiedliche geometrische Formen besitzen, von denen einige als Beispiele in Fig. 7 dargestellt sind. So können die Abschlußkanten 12 wie in Fig. 7 gezeigt, im Bereich der Ausnehmung 10 z.B. die Form eines Bogens 12a, die Form einer Schräge oder Geraden 12b oder die Form von zwei oder mehreren im Winkel zueinander angeordneten geradlinigen Teilabschnitten 12c aufweisen. Es ist jedoch ebenfalls möglich, daß die gesamte vom ersten Seitenteil 2a zum zweiten Seitenteil 2b verlaufende Abschlußkante des Boden- und Deckenteils 4, 6 insgesamt die Form eines Bogens oder Halbbogens 12d aufweist. Bei einer nicht dargestellten Ausführungsform weisen die Seitenwände 2a, 2b eine im wesentlichen identische Länge auf, und die Ausnehmungen 10 der Fig. 7 mit ihren zuvor beschriebenen Abschlußkanten 12a, 12b und 12c sind jeweils symmetrisch rechts und links der Mittellinie des Aufbewahrungsbehälters angeordnet. Bei allen Ausführungsformen erstrecken sich das Boden- und Deckenteil 4, 6 im Bereich der Front-Öffnung über mindestens eine der Seitenwände 2a, 2b hinaus und weisen folglich eine in radialer Richtung zur Front-Öffnung 8 hin gesehen größere Länge als die entsprechende Seitenwand auf.

Um eine größere Anzahl von erfindungsgemäßen Aufbewahrungsbehältern 1 in platzsparender Weise aufzustellen, werden diese in spiegelbildlich zueinander aufgebauten, nebeneneinanderliegenden Zweierpaaren zu einer kreis-, halbkreis,- viertelkreis- oder beliebigen kreisausschnittförmigen Formation zusammengefügt oder entlang einer Geraden angeordnet, wobei in letzerem Falle die Frontöffnungen zweier benachbarter Aufbewahrungsbehälter 1 auf einander gegenüberliegenden Seiten der Geraden liegen. Bei der in Fig. 7 gezeigten Formation wurden aus darstellungstechnischen Gründen Zweiergruppen verschiedener Ausführungsformen des erfindungsgemäßen Aufbewahrungsbehälters 1 kreisförmig angeordnet. In der Praxis enthält die in Fig. 7 gezeigte Kreisformation jedoch vorzugsweise ausschließlich Aufbewahrungsbehälter einer einzigen Ausführungsform. Die Anzahl der Aufbewahrungsbehälter, die in einer Kreisformation angeordnet werden können, ist nicht auf die in Fig. 7 dargestellten 10 Behälter sowie auf eine gerade Anzahl beschränkt, sondern kann je nach Kreisdurchmesser, Breite der Front-Öffnung und Länge der Seitenwände auch größer oder kleiner sein.

Weiterhin kann es vorteilhaft sein, bei kreis- oder kreisringausschnittsförmigen Anordnungen von mehreren Aufbewahrungsbehältern 1, wie in Fig. 8 gezeigt, im radialen Abstand von den Ausnehmungen 10 bzw. Front-Öffnungen 8 eine weitere kreis- oder kreisringausschnittsförmige Formation von Aufbewahrungsbehältern 150 anzuordnen, welche entweder erfindungsgemäße Aufbewahrungsbehälter sein können, vorzugsweise jedoch herkömmliche Garagen für drei- oder vierrädrige Fahrzeuge 130 sind. Zwischen den Behältern 1 und 15 kann ein Zufahrtsweg 120 vorgesehen sein, welcher eine solche Breite aufweist, daß ein bequemes Hinein- und Herausschieben eines Zweirades in die Behälter 1 möglich ist. Die Breite des Zufahrtsweges 120 kann beispielsweise zwischen 2 m und 4m liegen.

Um eine optimale Raumausnutzung bei der zuvor beschriebenen Anordnung mehrerer erfindungsgemäßer Aufbewahrungsbehälter 1 zu erhalten, werden, wie in Fig. 1 gezeigt, jeweils zwei Aufbewahrungsbehälter deckungsgleich übereinander angeordnet. Durch die Verwendung einer solchen zweiten Ebene von Aufbewahrungsbehältern verdoppelt sich die Anzahl der auf einer gleichen, z.B. in Fig. 7 gezeigten Grundfläche zu lagernden Zweiräder. Auf der Oberseite der oberen Ebene kann weiterhin entweder ein über die Front-Öffnungen 8 hervorstehendes Dach aufgesetzt sein, oder es kann anstelle des Daches ein Zwischenboden eingezogen werden, so daß über eine schräge Rampe und einen umlaufenden begehbaren Steg nochmals zwei weitere Ebenen von Aufbewahrungsbehältern aufgesetzt werden können. Sofern es die Topografie des Geländes, z.B. Hanglage, erlaubt, ist eine dritte oder weitere Doppelebene aufsetzbar, ohne daß zusätzliche technische Hilfmittel, wie Fahrstühle oder Hubanlagen, benötigt werden.

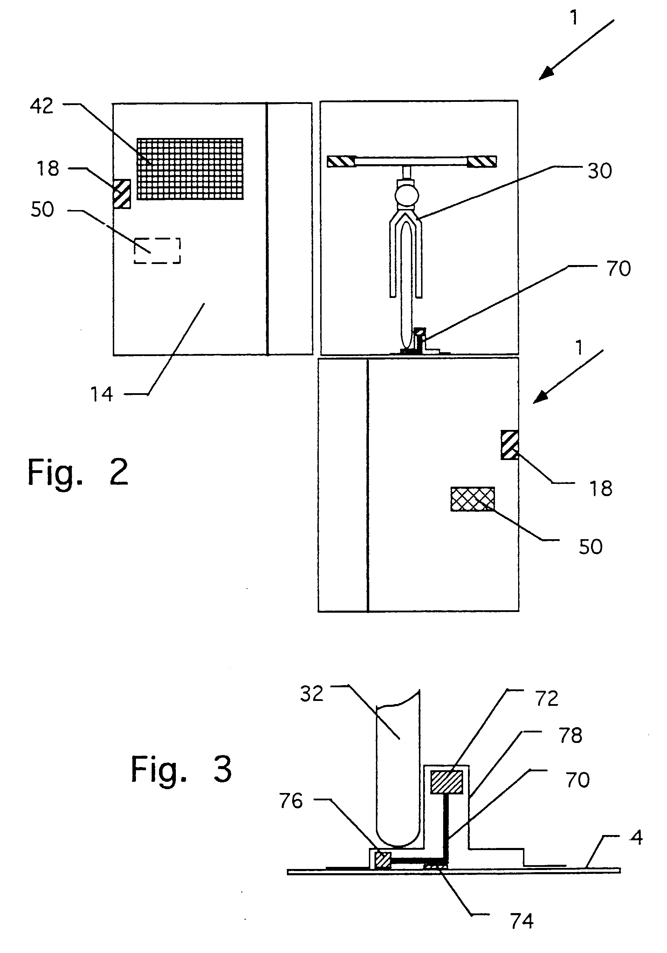

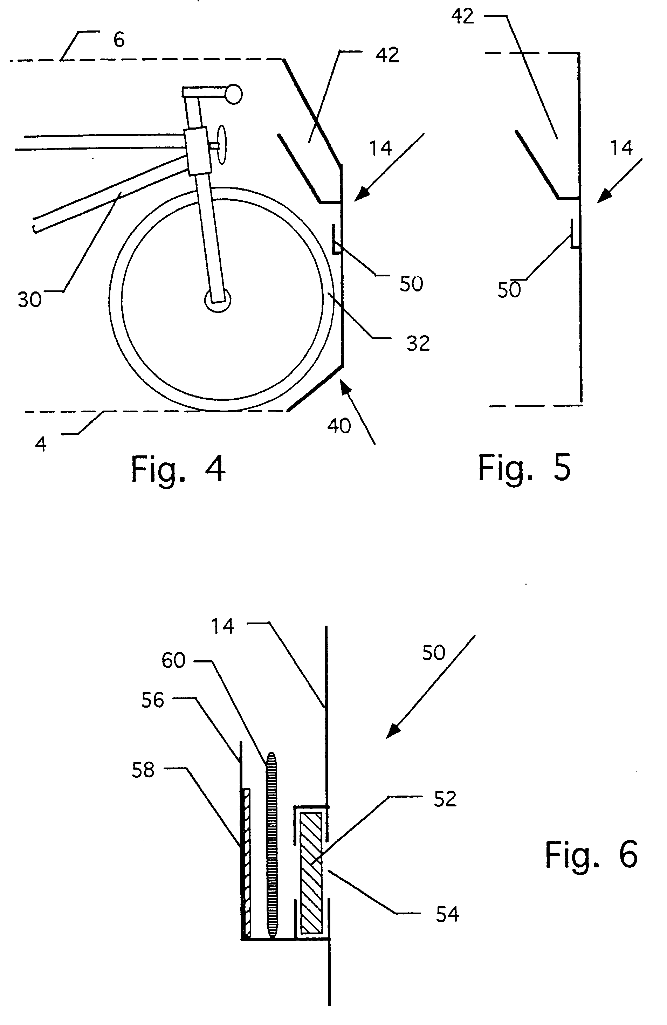

In einer bevorzugten Ausführungsform enthält der erfindungsgemäße Aufbewahrungsbehälter 1 weiterhin eine die Front-Öffnung 8 verschließende und der jeweiligen geometrischen Form der Abschlußkante 12 angepaßte Tür 14, welche entweder zweiflügelig (Fig. 1) oder aber einflügelig (Fig. 2) aufgebaut sein kann. Im Falle einer zweiflügelig aufgebauten Tür enthält diese vorzugsweise einen ersten zur Seite hin aufklappbaren Türflügel 14a und einen zweiten, nach unten herunterklappbaren und durch einen Anschlag oder eine Halteeinrichtung 20 z.B. in Form einer Kette, eines Seiles oder einer Stange gehaltenen Türflügel 14b, welcher, wie in Fig. 1 gezeigt, gleichzeitig als Auffahrrampe für das Zweirad 30 dienen kann. Die Tür 14 ist vorzugsweise aus ebenen Plattenelementen zusammengesetzt, so daß sich eine in den Figs. 1 und 5 gezeigte geradlinige vertikale Schnittlinie ergibt. Sie kann jedoch zum Zwecke einer zusätzlichen Raumeinsparung ebenfalls, wie in Fig. 4 gezeigt, eine nach außen hin gerichtete Wölbung 40 aufweisen, in welche sich ein Teil des Vorderrades 32 hineinerstrecken kann. Auf der Innenseite der Tür 14 kann, wie in den Figs. 4 und 5 gezeigt, weiterhin ein Behälter oder Korb 42 zur Aufbewahrung von persönlichen Gegenständen des Benutzers, wie beispielsweise Schutzhelm und Schutzbekleidung, vorgesehen sein.

Die Tür 14 kann ferner eine in Fig. 6 vergrößert dargestellte, von außen her einsehbare Einrichtung 50 zur Aufnahme eines Parkscheines, Dauerparkausweises oder eines Berechtigungsausweises 60 enthalten. Die Einrichtung 50 weist ein aus durchsichtigem, widerstandsfähigem Material gebildetes und auf der Innenseite der Tür 14 befestigtes, eine in der Tür 14 gebildete Öffnung 54 abdeckendes Sichtfenster 52 auf, durch welches hindurch der Benutzer auf eine im Abstand hinter dem Sichtfenster 52 an einer Halterung 56 angeordnete, beispielsweise grünfarbige Fläche 58 sieht, wenn sich kein Berechtigungsnachweis 60 zwischen dem Sichtfenster 52 und der grünfarbigen Fläche 58 befindet. In diesem Falle erkennt der Benutzer schon von weitem, daß der entsprechende Aufbewahrungsbehälter 1 von ihm benutzt werden kann. Bei einem bereits benutzten Behälter 1 mit eingefügtem Berechtigungsnachweis 60 wird hingegen die grünfarbige Fläche durch den Berechtigungsnachweis 60 verdeckt und die Information auf dem Berechtigungsnachweis 60 durch das Sichtfenster 52 hindurch angezeigt.

Die Tür 14 des erfindungsgemäßen Aufbewahrungsbehälters 1 kann darüberhinaus weiterhin eine Sicherungseinrichtung 18 zur Sicherung der Tür 14 gegen den Zugang einer nicht berechtigten Person enthalten, welche beispielsweise durch ein Münzpfandschloß, ein herkömmliches Schloß oder einen durch ein Vorhängeschloß absperrbaren Riegel etc. gebildet sein kann.

Bei den in den Figs. 1 und 2 dargestellten Ausführungsformen des erfindungsgemäßen Aufbewahrungsbehälters 1 kann in jedem der oberen Aufbewahrungsbehälter 1 weiterhin eine herausziehbare, als Auffahrhilfe dienende Schiene 70 vorgesehen sein, auf welche das Zweirad 30 gestellt und anschließend auf dieser in den Aufbewahrungsbehälter 1 hineingeschoben werden kann. Die Schiene 70 kann, wie in Fig. 3 gezeigt, L-förmig sein und ist vorzugsweise mit Hilfe von Gleitkörpern 72, 74 und 76 in einem sich in das Innere des Aufbewahrungsbehälters 1 hineinerstreckenden, im Bereich des Bodenteiles 4 gebildeten Gehäuse 78 hin- und herbewegbar gelagert und mittels eines nicht dargestellten Anschlages gegen ein vollständiges Herausgleiten gesichert. Das Gehäuse 78 ist vorzugsweise symmetrisch aufgebaut und kann somit einheitlich bei allen spiegelbildlich zueinander aufgebauten benachbarten oberen Aufbewahrungsbehältern einer in Fig. 7 dargestellten Kreisformation verwendet werden. Die Form der Schiene 70 ist jedoch nicht auf die in Fig. 3 dargestellte L-Form beschränkt und kann beispielsweise T-Form, V-Form, Z-Form, U-Form oder eine andere geometrische Form aufweisen. Die Schiene 70 kann ferner in der Weise im Gehäuse 78 gelagert sein, daß sich das aus dem Innenraum des Aufbewahrungsbehälters 1 hinausweisende Schienenende 82 bei vollständig herausgezogener Schiene 70, wie in Fig. 1 gezeigt, bis auf den Erdboden hinunter erstreckt. Um bei herausgezogener Schiene 70 ein Herunterrollen des Zweirades 30 von der Schiene 70 zu verhindern, kann am Schienenende 82 ein Vorsprung 80 vorgesehen sein.

Anstelle der Schiene 70 kann ferner eine nicht dargestellte, im oder oberhalb des Bodenteils 4 gebildete herausziehbare Bodenplatte vorgesehen sein, welche als Auffahrhilfe zum Hinein- und Herausschieben des Zweirades 30 dient, oder es kann das Bodenteil 4 insgesamt als ganzes herausziehbar sein. An der Schiene 70, bzw. an der Bodenplatte können ferner ebenfalls nicht dargestellte Haltemittel vorgesehen sein, welche das Zweirad 30 beim Hinein- und Herausschieben in einer vertikalen Lage halten.

Um bei Regen und Feuchtigkeit ein seitliches Wegrutschen des Zweirades 30 beim Einführen in den Aufbewahrungsbehälter 1 zu verhindern, kann, wie in Fig. 7 gezeigt, im Bereich der Mitte des Bodenteiles 4 eine ortsfeste Hilfsoder Führungsschiene 92 vorgesehen sein, welche beispielsweise aus Holz, Blech etc. bestehen kann, oder der Aufbewahrungsbehälter 1 kann im Bereich des Bodenteils 4 eine geriffelte und rutschfeste Oberfläche aufweisen.

## Patentansprüche

1. Aulbewahrungsbehälter (1) für Zweiräder, insbesondere für Fahrräder, mit zwei im wesenlichen im spitzen Winkel zueinander angeordneten, den Aufbewahrungsbehälter (1) seitlich begrenzenden Seitenwänden (2a, 2b), mit einem den Aufbewahrungsbehälter (1) nach unten hin begrenzenden Bodenteil (4) und einem den Aufbewahrungsbehälter (1) nach oben hin begrenzenden Deckenteil (6) sowie mit einer dem Schnittpunkt der Seitenwände (2a, 2b) gegenüberliegenden Front-Öffnung (8) zum Einführen eines Zweirads (30) mit seinem rückwärtigen Ende voran in den Aufbewahrungsbehälter (1), wobei zumindest eines der Seitenteile (2b, 2a) eine geringere Länge als das Boden- und Deckenteil (4, 6) im Bereich der Mitte der Front-Öffnung (8) besitzt,
**dadurch gekennzeichnet,** daß
die Grundfläche des Bodenteils (4) und des Deckenteils (6) im Bereich der Front-Öffnung (8), eine zwischen der einen Seitenwand (2b) und der Mitte der Front-Öffnung (8) gebildete Ausnehmung (10) mit einer entlang der Ausnehmung (10) verlaufenden Abschlußkante (12) des Boden- und Deckenteils (4, 6) aufweist.

2. Aufbewahrungsbehälter nach Anspruch 1,
**dadurch gekennzeichnet**, daß
die von der einen Seitenwand (2a) zur anderen Seitenwand (2b) eines Aufbewahrungsbehälters (1) im Bereich der Front-Öffnung (8) verlaufenden Abschlußkanten (12a; 12b; 12c; 12d) des Boden- und Deckenteils (4, 6) eine im wesentlichen gleiche geometrische Form aufweisen.

3. Aufbewahrungsbehälter nach Anspruch 2,
**dadurch gekennzeichnet**, daß
die Abschlußkanten des Boden- und Deckenteils (4, 6) einen oder mehrere bogenförmige Abschnitt (12a; 12d) enthalten.

4. Aufbewahrungsbehälter nach einem der vorhergehenden Ansprüche,
**dadurch gekennzeichnet**, daß
die Abschlußkanten des Boden- und Deckenteils (4, 6) im Bereich zwischen der Mitte der Front-Öffnung (8) und einer Seitenwand (2a, 2b) geradlinige und/oder im Winkel zueinander angeordnete Teilabschnitte (12b; 12c) enthalten, welche seitlich der Mitte der Front-Öffnung (8) eine im Boden- oder Deckenteil (4, 6) gebildete Ausnehmung (10) begrenzen.

5. Aufbewahrungsbehälter nach einem der vorhergehenden Ansprüche,
**dadurch gekennzeichnet**, daß
eine die Front-Öffnung (8) verschließende Tür (14) vorgesehen ist.

6. Aufbewahrungsbehälter nach Anspruch 5,
**dadurch gekennzeichnet**, daß
die Tür (14) eine zur Außenseite des Behälters (1) hin zeigende Wölbung (40) aufweist, in welche das Vorderrad (32) eines im Behälter (1) enthaltenen Zweirades (30) hineinragt.

7. Aufbewahrungsbehälter nach Anspruch 5 oder 6,
**dadurch gekennzeichnet**, daß
in der Tür (14) eine Vorrichtung (50) zur Aufnahme eines Nutzungsberechtigungsnachweises (60) und/oder zur externen Anzeige des Benutzungsstatusses des Aufbewahrungsbehälters (1) enthalten ist.

8. Aufbewahrungsbehälter nach einem der Ansprüche 5 bis 7,
**dadurch gekennzeichnet**, daß
die Tür (14) einen ersten, zur Seite schwenkbaren Türflügel (14a) und einen zweiten, nach unten klappbaren und als Auffahrhilfe für das Zweirad (30) dienenden Türflügel (14b) enthält.

9. Formation von Aufbewahrungsbehältern nach einem der vorhergehenden Ansprüche,
**dadurch gekennzeichnet**, daß
die Aufbewahrungsbehälter in mindestens zwei Ebenen im wesentlichen deckungsgleich übereinander angeordnet werden.

10. Aufbewahrungsbehälter nach einem der vorhergehenden Ansprüche,
**dadurch gekennzeichnet**, daß
eine als Auffahrhilfe dienende Schiene (70) vorgesehen ist, über welche das Zweirad (30) in den Aufbewahrungsbehälter (1) hineinbewegt werden kann.

11. Aufbewahrungsbehälter nach einem der vorhergehenden Ansprüche,
**dadurch gekennzeichnet**, daß
das Bodenteil (4) oder ein Teil desselben herausziehbar ist.

12. Formation von Aufbewahrungsbehältern nach einem der vorhergehenden Ansprüche,
**dadurch gekennzeichnet**, daß
die Aufbewahrungsbehälter eine kreis-, kreisringauschnitt-, bogen- oder reihenförmige aneinanderreihbare Zweirad-Parkanlange bilden.

13. Formation von Aulbewahrungsbehältern nach einem der vorhergehenden Ansprüche,
**dadurch gekennzeichnet,** daß
nebeneinanderliegende Aufbewahrungsbehälter paarweise spiegelbildlich zueinander angeordnet sind.

## Claims

1. Storage container (1) for two-wheelers, in particular for bicycles, having two side walls (2a, 2b), which are arranged essentially at an acute angle with respect to one another and which bound the sides of the storage container (1), having a base part (4) bounding the storage container (1) towards the bottom and a cover part (6) bounding the storage container (1) towards the top, and having a front opening (8), situated opposite the intersection of the side walls (2a, 2b), for the purpose of introducing a two-wheeler (30) into the storage container (1), with its back end first, at least one of the side parts (2b, 2a) having a shorter length than the base and cover parts (4, 6) in the region of the centre of the front opening (8), characterized in that the surface area of the base part (4) and of the cover part (6) has, in the region of the front opening (8), a recess (10) formed between the one side wall (2b) and the centre of the front opening (8) and having a border edge (12) of the base and cover parts (4, 6) running along the recess (10).

2. Storage container according to Claim 1, characterized in that the border edges (12a; 12b; 12c; 12d), running from the one side wall (2a) to the other side wall (2b) of a storage container (1) in the region of the front opening (8), of the base and cover parts (4, 6) have an essentially identical geometric shape.

3. Storage container according to Claim 2, characterized in that the border edges of the base and cover parts (4, 6) contain one or more curved sections (12a; 12d).

4. Storage container according to one of the preceding claims, characterized in that the border edges of the base and cover parts (4, 6) contain part-sections (12b; 12c), which are straight and/or arranged at an angle with respect to one another, in the region between the centre of the front opening (8) and a side wall (2a, 2b), which part-sections, to the side of the centre of the front opening (8), bound a recess (10) formed in the base or cover part (4, 6).

5. Storage container according to one of the preceding claims, characterized in that a door (14) which closes off the front opening (8) is provided.

6. Storage container according to Claim 5, characterized in that the door (14) has a convex bulge (40) pointing towards the outside of the container (1), into which bulge the front wheel (32) of a two-wheeler (30) contained in the container (1) projects.

7. Storage container according to Claim 5 or 6, characterized in that a device (50) for receiving a proof of authorization of use (60) and/or for externally displaying the state of occupation of the storage container (1) is contained in the door (14).

8. Storage container according to one of Claims 5 to 7, characterized in that the door (14) contains a first door leaf (14a), which can be pivoted sideways, and a second door leaf (14b) which can be folded downwards and serves as an aid for driving in the two-wheeler (30).

9. Arrangement of storage containers according to one of the preceding claims, characterized in that the storage containers are arranged essentially congruently above one another in at least two planes.

10. Storage container according to one of the preceding claims, characterized in that a rail (70), which serves as an aid for driving in the two-wheeler up, is provided, by means of which the two-wheeler (30) can be moved into the storage container (1).

11. Storage container according to one of the preceding claims, characterized in that the base part (4) or a part thereof can be pulled out.

12. Arrangement of storage containers according to one of the preceding claims, characterized in that the storage containers form a two-wheeler parking installation which can be arranged next to one another in the form of a circle, a ring segment, a curve or a row.

13. Arrangement of storage containers according to one of the preceding claims, characterized in that pairs of adjacent storage containers are arranged mirror symmetrically with respect to one another.

## Revendications

1. Réceptacle de rangement (1) pour véhicules à deux roues, en particulier pour bicyclettes, avec deux parois latérales (2a, 2b) délimitant latéralement le réceptacle de rangement (1) qui sont disposées essentiellement en angle aigu l'une par rapport à l'autre, avec une partie de fond (4) délimitant le réceptacle de rangement (1) vers le bas et une partie de plafond (6) délimitant le réceptacle de rangement (1) vers le haut, et avec une ouverture frontale (8) opposée au point d'intersection des parois latérales (2a, 2b) et destinée à introduire un véhicule à deux roues (30) avec son extrémité arrière en premier dans le réceptacle de rangement (1), au moins une des parois latérales (2a, 2b) possédant une longueur inférieure à celle de la partie de fond (4) et de la partie de plafond (6) dans la région du milieu de l'ouverture frontale (8),
**caractérisé** en ce que la surface de base de la partie de fond (4) et de la partie de plafond (6) présente, dans la région de l'ouverture frontale (8), un évidement (10) formé entre l'une (2b) des parois latérales et le milieu de l'ouverture frontale (8), un bord de terminaison (12) de la partie de fond (4) et de la partie de plafond (6) s'étendant le long de l'évidement (10).

2. Réceptacle de rangement selon la revendication 1, **caractérisé** en ce que les bords de terminaison (12a, 12b, 12c, 12d) de la partie de fond (4) et de la partie de plafond (6) qui s'étendent d'une paroi latérale (2a) à l'autre paroi latérale (2b) d'un réceptacle de rangement (1) dans la région de l'ouverture frontale (8) présentent une forme géométrique sensiblement identique.

3. Réceptacle de rangement selon la revendication 2, **caractérisé** en ce que les bords de terminaison de la partie de fond (4) et de la partie de plafond (6) comprennent un ou plusieurs tronçons arqués (12a, 12b).

4. Réceptacle de rangement selon l'une des revendications précédentes, **caractérisé** en ce que les bords de terminaison de la partie de fond (4) et de la partie de plafond (6) comprennent, dans la région située entre le milieu de l'ouverture frontale (8) et une paroi latérale (2a, 2b), des tronçons partiels (12b, 12c) rectilignes et/ou disposés en angle l'un par rapport à l'autre, qui délimitent latéralement au milieu de l'ouverture frontale (8) un évidement (10) formé dans la partie de fond (4) ou de plafond (6).

5. Réceptacle de rangement selon l'une des revendications précédentes, **caractérisé** en ce qu'il est prévu une porte (14) fermant l'ouverture frontale (8).

6. Réceptacle de rangement selon la revendication 5, **caractérisé** en ce que la porte (14) présente un bombage (40) dirigé vers le côté extérieur du réceptacle (1), dans laquelle pénètre la roue avant (32) d'un véhicule à deux roues (30) contenu dans le réceptacle (1).

7. Réceptacle de rangement selon la revendication 5 ou 6, **caractérisé** en ce qu'un dispositif (50) est contenu dans la porte (14) pour recevoir une carte d'autorisation d'utilisation (60) et/ou pour l'affichage externe de l'état d'utilisation du réceptacle de rangement (1).

8. Réceptacle de rangement selon l'une des revendications 5 à 7, **caractérisé** en ce que la porte (14) comprend un premier battant de porte (14a), pivotant vers le côté, et un second battant de porte (14b), rabattable vers le bas et servant d'aide d'accès pour le véhicule à deux roues (30).

9. Formation de réceptacles de rangement selon l'une des revendications précédentes, **caractérisée** en ce que les réceptacles de rangement sont disposés dans au moins deux plans en étant superposés de façon essentiellement coïncidente.

10. Réceptacle de rangement selon l'une des revendications précédentes, **caractérisé** en ce qu'il est prévu un rail (70) servant d'aide d'accès, au moyen duquel le véhicule à deux roues (30) peut être déplacé à l'intérieur du réceptacle de rangement (1).

11. Réceptacle de rangement selon l'une des revendications précédentes, **caractérisé** en ce qu'on peut retirer la partie de fond (4) ou une partie de cette dernière.

12. Formation de réceptacles de rangement selon l'une des revendications précédentes, **caractérisée** en ce que les réceptacles de rangement forment une installation de remisage de véhicules à deux roues juxtaposable en forme de cercle, de segment d'anneau de cercle, d'arc ou de rangée.

13. Formation de réceptacles de rangement selon l'une des revendications précédentes, **caractérisée** en ce que des réceptacles de rangement juxtaposés sont disposés en symétrie par paires.
